# FASCICULE DE BREVET EUROPEEN

(11) **EP 3 999 906 B1**
(45) Date de publication et mention de la délivrance du brevet: **26.06.2024**
(21) Numéro de dépôt: 20739424.8
(22) Date de dépôt: 16.07.2020
(51) Int. Cl.: G02F 1/35, H01S 3/30

(54) **SYSTÈME DE GÉNÉRATION D'IMPULSION LUMINEUSE ULTRA-COURTE DE FORTE ÉNERGIE AVEC MODULE DE MISE EN FORME SPECTRALE**
SYSTEM ZUR ERZEUGUNG EINES HOCHENERGETISCHEN ULTRAKURZEN LICHTIMPULSES MIT EINEM SPEKTRALFORMUNGSMODUL
SYSTEM FOR GENERATING A HIGH-ENERGY, ULTRA-SHORT LIGHT PULSE WITH A SPECTRAL SHAPING MODULE

(30) Priorité: 17.07.2019 FR 1908070
(43) Date de publication de la demande: 25.05.2022
(73) Titulaire: ALPhANOV, 33400 Talence (FR)
(72) Inventeur: BOIVINET, Simon, 33000 Bordeaux (FR); MORIN, Philippe, 33260 La Teste de Buch (FR); MACHINET, Guillaume, 33610 Canejan (FR)
(74) Mandataire: Jacobacci Coralis Harle
(86) Numéro de dépôt international: PCT/EP2020/070225
(87) Numéro de publication internationale: WO 2021/009323

(56) Documents cités:
- EP-A2- 2 086 074
- FR-A1- 3 054 733
- US-A1- 2004 190 119
- US-A1- 2015 325 972

## Description

### Domaine Technique

La présente invention concerne de manière générale le domaine des systèmes d'amplification et de compression d'impulsions lumineuses ultra-courtes.

Elle concerne plus particulièrement le domaine des systèmes d'amplification comprenant un système de génération d'impulsions lumineuses ultra-courtes à base de lasers à fibres.

### Arrière-Plan Technologique

L'amplification à dérive de fréquence (appelée « Chirped Pulse Amplification » en anglais, notée CPA) est une technique d'amplification d'impulsions lumineuses ultra-courtes. Cette technique d'amplification permet d'obtenir des impulsions lumineuses ultra-courtes de très fortes énergies.

La technique CPA consiste d'abord à étirer temporellement les différentes composantes spectrales d'une impulsion lumineuse. Une fois la durée de l'impulsion lumineuse élargie, cette dernière est ensuite amplifiée dans différents milieux amplificateurs puis finalement comprimée temporellement pour atteindre la durée temporelle de l'impulsion lumineuse initiale ou la plus courte possible. Les systèmes CPA sont basés sur une amplification linéaire.

Plus récemment sont apparus des systèmes d'amplification et de compression basés sur des processus non-linéaires permettant d'élargir le spectre de l'impulsion lumineuse et ainsi atteindre une durée plus courte que celle de l'impulsion lumineuse initiale, comme dans les documents FR3054733, US2015/325972 ou US2004/190119.

Aujourd'hui, on souhaite de plus en plus développer des lasers compacts délivrant des impulsions lumineuses de durée inférieure ou égale à 100 fs, de très forte énergie (i.e. pour une puissance crête d'entrée supérieure ou égale à une dizaine de kW). Ces lasers compacts sont notamment très demandés par exemple pour injecter une impulsion lumineuse ultra-courte dans un amplificateur optique régénératif titane-saphir ou un système CPA.

### Objet de l'invention

Il est ainsi proposé, selon l'invention, un système de génération d'impulsion lumineuse ultra-courte de forte énergie comprenant un générateur adapté pour générer au moins une impulsion source courte étirée temporellement, un amplificateur optique à amplification non-linéaire et à compression non-linéaire comprenant une fibre optique amplificatrice ayant une dispersion de vitesse de groupe β₂ négative dans une gamme de longueur d'onde d'utilisation, ledit amplificateur optique à amplification non-linéaire et à compression non-linéaire étant adapté pour amplifier et comprimer non-linéairement ladite impulsion source courte étirée temporellement et pour former une impulsion amplifiée, dans lequel un module de mise en forme spectrale est disposé en aval de ladite fibre optique amplificatrice, le module de mise en forme spectrale comprenant un composant optique ayant une dispersion de vitesse de groupe β₂ positive, ledit module de mise en forme spectrale étant adapté pour recevoir et élargir spectralement ladite impulsion amplifiée.

Le système de génération d'impulsion lumineuse ultra-courte de forte énergie permet avantageusement d'atténuer des modulations spectrales présentes sur le spectre de l'impulsion amplifiée. Il offre la possibilité d'obtenir un lissage spectral de l'impulsion amplifiée, est facile à utiliser et permet d'injecter une impulsion lumineuse dans un amplificateur optique de forte puissance.

Selon un aspect particulier, la fibre optique amplificatrice est active.

Plus particulièrement, la fibre optique amplificatrice est dopée d'un matériau terre rare choisi parmi l'erbium, l'ytterbium, le thulium, l'holmium, le néodyme ou la fibre optique amplificatrice est codopée erbium-ytterbium ou thulium-holmium.

Selon un autre aspect particulier, la fibre optique amplificatrice est passive et permet une amplification optique non-linéaire paramétrique optique ou Raman.

La fibre optique amplificatrice a par exemple une longueur comprise entre 20 cm et 20 m.

Avantageusement, la longueur de la fibre optique amplificatrice de l'amplificateur optique à amplification non-linéaire et à compression non-linéaire est choisie en fonction de la première puissance crête en entrée de l'amplificateur optique à amplification non-linéaire et à compression non-linéaire, de la dispersion de vitesse de groupe β₂ et du coefficient non-linéaire γ de la fibre optique amplificatrice de l'amplificateur optique à amplification non-linéaire et à compression non-linéaire.

Le module de mise en forme spectrale comprend par exemple une fibre optique ou un cristal solide ou un matériau solide non cristallin ou un disque.

De façon avantageuse, la longueur du composant optique du module de mise en forme spectrale est choisie en fonction de la deuxième puissance crête en entrée du module de mise en forme spectrale, de la dispersion de vitesse de groupe β₂ et du coefficient non-linéaire γ du composant optique du module de mise en forme spectrale.

Selon un mode de réalisation particulier, le système de génération d'impulsion lumineuse ultra-courte de forte énergie comprend un compresseur ayant une dispersion de vitesse de groupe négative et est disposé en aval de l'amplificateur optique à amplification non-linéaire et à compression non-linéaire.

Selon un mode de réalisation, le système de génération d'impulsion lumineuse ultra-courte de forte énergie comprend un module optique non-linéaire de conversion en fréquence disposé en aval de l'amplificateur optique à amplification non-linéaire et à compression non-linéaire de sorte à générer un signal de deuxième, troisième et/ou quatrième harmonique ou de somme de fréquences ou différence de fréquences.

Selon un autre mode de réalisation, le système de génération d'impulsion lumineuse ultra-courte de forte énergie comprend un module de mise en forme spatiale ou d'adaptation modale de l'impulsion amplifiée et est disposé en amont ou en aval du module de mise en forme spectrale.

La présente invention propose également un système laser comprenant un système de génération d'impulsion lumineuse ultra-courte de forte énergie tel que précité et un système amplificateur optique de puissance disposé en aval du module de mise en forme spectrale et adapté pour recevoir une impulsion ultra-courte amplifiée, comprimée et élargie spectralement issue du système de génération d'impulsion.

Les différentes caractéristiques, variantes et formes de réalisation de l'invention peuvent être associées les unes avec les autres selon diverses combinaisons dans la mesure où elles ne sont pas incompatibles ou exclusives les unes des autres.

### Brève description des dessins

De plus, diverses autres caractéristiques de l'invention ressortent de la description annexée effectuée en référence aux dessins qui illustrent des formes, non limitatives, de réalisation de l'invention et où :
[Fig. 1] est une représentation schématique d'un système de génération d'impulsion lumineuse ultra-courte et de forte énergie selon la présente divulgation,
[Fig. 2] est un exemple de modulation spectrale d'une impulsion amplifiée à la sortie d'un amplificateur optique à compression non-linéaire et ici doublée en fréquence,
[Fig. 3] est un graphique représentant un exemple expérimental de profil spectral d'une impulsion amplifiée obtenu en entrée et en sortie du module de mise en forme spectrale selon le mode de réalisation illustré sur la figure 5,
[Fig. 4] est une représentation schématique d'un système de génération d'impulsion lumineuse ultra-courte et de forte énergie selon un mode de réalisation particulier,
[Fig. 5] est une représentation schématique d'un système de génération d'impulsion lumineuse amplifiée et élargie spectralement selon un mode de réalisation particulier,
[Fig. 6] est un exemple d'une simulation numérique d'un profil temporel d'une impulsion amplifiée et comprimée obtenu en entrée et en sortie du module de mise en forme spectrale,
[Fig. 7] est un exemple d'une simulation numérique d'un profil spectral d'une impulsion amplifiée et comprimée obtenu en entrée et en sortie du module de mise en forme spectrale décrite dans l'exemple de la figure 6.

Il est à noter que sur ces figures les éléments structurels et/ou fonctionnels communs aux différentes variantes peuvent présenter les mêmes références.

### Description détaillée

Une impulsion lumineuse ultra-courte est ici définie comme une impulsion lumineuse dont la durée temporelle est comprise entre 10 fs et 100 fs. Une impulsion lumineuse courte est ici définie comme une impulsion lumineuse dont la durée temporelle est comprise entre 100 fs et environ 1 ps. Une impulsion lumineuse de forte énergie est définie ici comme une impulsion lumineuse dont l'énergie est comprise entre 0,2 nJ et 10 µJ, soit une puissance crête étant comprise entre 2 kW et 10 GW, de préférence la puissance crête est comprise entre 2 kW et 10 MW.

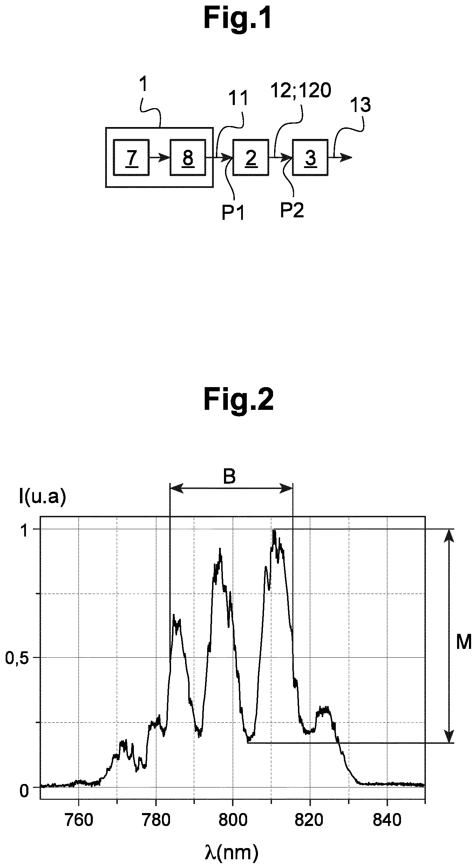

La figure 1 représente un système de génération d'impulsion lumineuse ultra-courte et de forte énergie selon la présente invention. Le système de génération d'impulsion lumineuse comprend un générateur 1 adapté pour générer au moins une impulsion source courte étirée temporellement 11 de durée comprise entre 100 fs et 30 ps, un amplificateur optique 2 à amplification non-linéaire et à compression non-linéaire, et un module de mise en forme spectrale 3.

De préférence, le générateur 1 comprend un oscillateur à blocage de mode 7 et un étireur 8, par exemple à fibre optique. Le générateur 1 et plus particulièrement l'étireur 8 a ici une dispersion de vitesse de groupe β₂ positive comprise entre 0 ps²/km et 150 ps²/km et de préférence comprise entre 0 ps²/km et -50 ps²/km.

Le générateur 1 comporte par exemple un laser à fibre ou solide qui délivre une impulsion source courte étirée temporellement 11 dans une gamme de longueur d'onde d'utilisation λ comprise entre 0,6 µm et 2 µm. Le choix de la longueur d'onde d'utilisation λ dépend de l'application désirée. Par exemple la longueur d'onde d'utilisation est comprise entre 1535 nm et 1595 nm.

On définit la puissance crête d'une impulsion lumineuse en entrée de l'amplificateur optique 2 à amplification non-linéaire et à compression non-linéaire comme la première puissance crête P1. On définit la puissance crête d'une impulsion lumineuse en entrée du module de mise en forme spectrale 3 comme la deuxième puissance crête P2.

L'amplificateur optique 2 est un amplificateur optique à amplification non-linéaire et à compression non-linéaire appelé amplificateur optique 2 dans la suite du texte. L'amplificateur optique 2 comprend une fibre optique amplificatrice ayant une dispersion de vitesse de groupe β₂ négative dans la gamme de longueur d'onde d'utilisation λ. Autrement dit, la fibre optique amplificatrice a une dispersion de vitesse de groupe anormale (« anomalous dispersion » en anglais). Cette fibre optique amplificatrice a une dispersion de vitesse de groupe β₂ comprise entre -100 ps²/km et 0 ps²/km et de préférence comprise entre -10 ps²/km et -30 ps²/km.

La longueur de la fibre optique amplificatrice de l'amplificateur optique 2 est déterminée expérimentalement et est choisie en fonction, d'une part, des coefficients intrinsèques de dispersion de vitesse de groupe β₂ et du coefficient non-linéaire γ de la fibre optique amplificatrice, et, d'autre part, de la première puissance crête P1. La dispersion de vitesse de groupe β₂ et le coefficient non-linéaire γ de la fibre optique amplificatrice sont des paramètres intrinsèques à la fibre optique amplificatrice fournis par le fabricant ou tabulés, et dépendent de la structure et de la composition de la fibre optique. Le coefficient non-linéaire γ dépend de la composition et/ou de la structure de chaque fibre optique et est égal à (2π.n₂)/(λ.A_{eff}) où n₂ correspond à l'indice optique non-linéaire de la fibre optique (comprise entre 0,5 x 10⁻²⁰ m²/W et 50 x 10⁻²⁰ m²/W), λ est la longueur d'onde d'utilisation et A_{eff} est l'aire effective (comprise entre 20 µm² et 3000 µm²) correspondant à l'aire du faisceau dans la fibre optique. A la différence de la dispersion de vitesse de groupe β₂ et du coefficient non-linéaire γ de la fibre optique, la première puissance crête P1 est un paramètre contrôlable et ajustable. La fibre optique amplificatrice a par exemple une longueur comprise entre 20 cm et 10 m.

La longueur de la fibre optique amplificatrice de l'amplificateur optique 2 peut être optimisée en fonction de la dispersion de vitesse de groupe β₂, de son coefficient non-linéaire γ , et de la première puissance crête P1 par simulation numérique via la résolution des équations non-linéaires de Schrôdinger et/ou expérimentalement.

La fibre optique amplificatrice de l'amplificateur optique 2 opère ici en régime d'amplification non-linéaire. Elle consiste par exemple en une fibre amplificatrice dite active dopée d'un matériau terre rare choisi parmi l'erbium, l'ytterbium, le thulium, le néodyme, ou l'holmium. Elle peut être codopée erbium-ytterbium ou thulium-holmium.

De façon alternative, la fibre optique est une fibre passive le long de laquelle l'amplification se fait aussi de façon non-linéaire, par exemple par amplification paramétrique optique ou par amplification Raman.

L'amplificateur optique 2 est adapté pour amplifier et comprimer temporellement ladite impulsion source courte étirée temporellement 11 et pour former une impulsion amplifiée et comprimée 12 de durée ultra-courte. Dans le cas général, la fibre optique amplificatrice n'est ni polarisante ni à maintien de polarisation.

Selon une variante particulière, l'amplificateur optique 2 est à maintien de polarisation et/ou comprend au moins un élément polarisant disposé à sa sortie ou à son entrée.

En sortie de l'amplificateur optique 2, les impulsions amplifiées et comprimées 12 (courtes ou ultra-courtes) ont une puissance crête relativement élevée. Les impulsions amplifiées et comprimées 12 ont une largeur de bande spectrale étendue sur plusieurs dizaines de nanomètres et présentent généralement de fortes modulations spectrales responsables d'une forme de spectre très distordue et/ou modulée (comme illustré plus bas sur la figure 2). Autrement dit, le spectre de l'impulsion amplifiée et comprimée non-linéairement présente plusieurs maxima et au moins un minimum d'intensité local à l'intérieur de la bande spectrale B à mi-hauteur. Ces modulations ou ces formes spectrales sont intrinsèquement liées à la physique gouvernant l'amplification et la compression non-linéaires et posent un problème pour certaines applications nécessitant l'utilisation de spectres lisses telles que l'injection d'une impulsion lumineuse ultra-courte dans un amplificateur optique de puissance, par exemple un amplificateur régénératif titane-saphir.

On définit ici une largeur de bande spectrale B du profil spectral d'une impulsion comme étant la largeur totale à mi-hauteur du maximum du spectre d'intensité de ladite impulsion. Le profil spectral de ladite impulsion a une enveloppe spectrale qui présente un maximum d'intensité dans la bande spectrale B et un minimum local d'intensité dans la bande spectrale B disposé entre deux maximas d'intensité adjacents dans la bande spectrale B. En outre, on définit ici une profondeur de modulation spectrale M en pourcentage qui correspond à la différence entre le maximum d'intensité dans la bande spectrale B et le minimum d'intensité local dans la bande spectrale B, cette différence étant divisée par la valeur dudit maximum d'intensité dans la bande spectrale B. Le profil spectral de l'impulsion est généralement normalisé par la valeur du maximum d'intensité absolu dans la bande spectrale B.

La figure 2 illustre un exemple de modulations spectrales d'une impulsion amplifiée, ici après être convertie en fréquence par doublage de fréquence à la sortie de l'amplificateur optique 2. Dans cet exemple, l'impulsion amplifiée et comprimée non-linéairement et convertie en fréquence a une bande spectrale B d'environ 31 nm, présente ici trois maximas d'intensité dans la bande spectrale B séparés par deux minima locaux relatifs d'intensité dans la bande spectrale B. Dans cet exemple, on évalue la profondeur de modulation spectrale M d'environ 82%. Cette profondeur de modulation spectrale M correspond à la différence entre le maximum d'intensité dans la bande spectrale B (ici égal à 100%) et le minimum d'intensité local dans la bande spectrale B (ici environ égal à 18%) de la modulation spectrale divisé par le maximum d'intensité dans la bande spectrale B.

En pratique, le module de mise en forme spectrale 3 est disposé en aval de la fibre optique amplificatrice de l'amplificateur optique 2 et reçoit une impulsion amplifiée courte ou ultra-courte.

Dans le cas particulier où le module de mise en forme spectrale 3 est disposé directement en contact avec l'amplificateur optique 2, le module de mise en forme spectrale 3 reçoit en entrée l'impulsion amplifiée et comprimée 12. Le module de mise en forme spectrale 3 est par exemple directement raccordé par soudage à l'amplificateur optique 2.

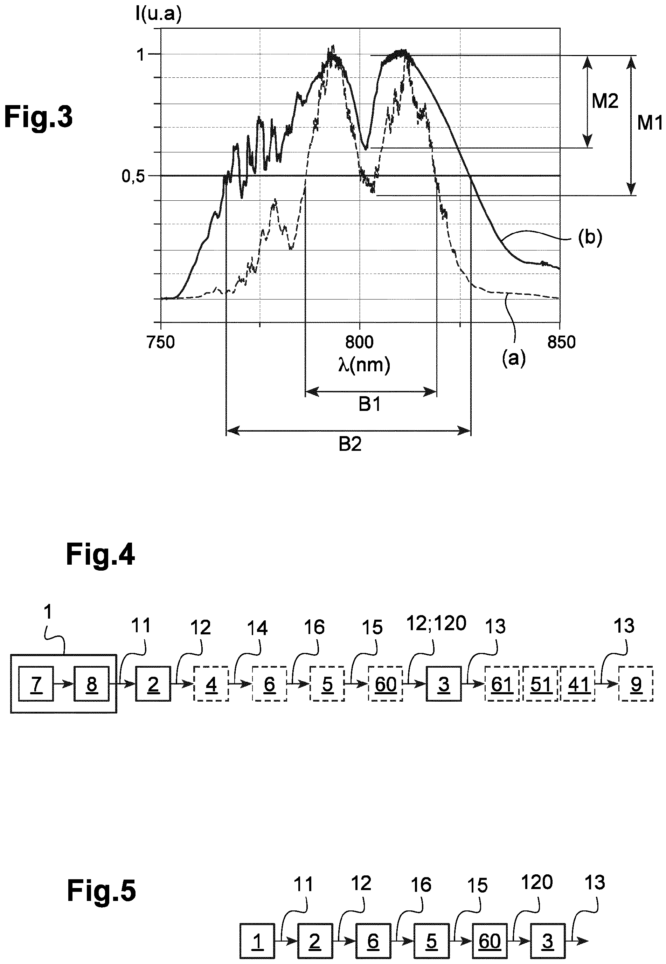

Toutefois, un espace libre et/ou un ou plusieurs composants décrits plus loin sur la figure 4 peuvent être disposés entre l'amplificateur optique 2 et le module de mise en forme spectrale 3. Lorsque l'impulsion amplifiée et comprimée 12 issue de l'amplificateur optique 2 traverse l'espace libre et/ou un ou plusieurs composants disposés entre l'amplificateur optique 2 et le module de mise en forme spectrale 3, cela induit une distorsion temporelle de l'impulsion amplifiée et comprimée 12. L'impulsion amplifiée et comprimée 12 devient alors une impulsion amplifiée 120 courte ou ultra-courte. Dans ce cas, le module de mise en forme spectrale 3 reçoit en entrée l'impulsion amplifiée 120 courte ou ultra-courte.

Le module de mise en forme spectrale 3 comprend un composant optique ayant une dispersion de vitesse de groupe β₂ positive. Autrement dit, le composant optique du module de mise en forme spectrale a une dispersion de vitesse de groupe normale (« normal dispersion » en anglais). Le composant optique du module de mise en forme spectrale a une dispersion de vitesse de groupe β₂ comprise par exemple entre 0 ps²/km et 500 ps²/km.

La longueur du composant optique du module de mise en forme spectrale 3 est déterminée expérimentalement et est choisie en fonction, d'une part, des coefficients intrinsèques de dispersion de vitesse de groupe β₂ et du coefficient non-linéaire γ du composant optique du module de mise en forme spectrale 3, et, d'autre part, de la deuxième puissance crête P2. La dispersion de vitesse de groupe β₂ et le coefficient non-linéaire γ du composant optique du module de mise en forme spectrale 3 sont des paramètres intrinsèques au composant optique du module de mise en forme spectrale 3. Ces paramètres intrinsèques sont fournis par le fabriquant ou tabulés et dépendent de la structure et de la composition du composant optique du module de mise en forme spectrale 3. Par exemple, pour un module de mise en forme spectrale 3 constitué d'une fibre optique à saut d'indice en silice ayant une dispersion de vitesse de groupe β₂ comprise entre 0 ps²/km et 50 ps²/km, un indice optique non-linéaire n₂ compris entre 0,5 x 10⁻²⁰ m²/W et 50 x 10⁻²⁰ m²/W, une aire effective A_{eff} comprise entre 20 µm² et 3000 µm² et pour une deuxième puissance crête P2 comprise entre 5 kW et 300 kW, la longueur du composant optique est comprise entre 0,5 mm et 2 m.

La longueur du composant optique du module de mise en forme spectrale 3 peut être optimisée en fonction de la dispersion de vitesse de groupe β₂ et du coefficient non-linéaire γ du composant optique du module de mise en forme spectrale 3, et de la deuxième puissance crête P2 par simulation numérique via la résolution des équations non-linéaires de Schrôdinger et/ou expérimentalement.

Le module de mise en forme spectrale 3 comprend par exemple une fibre optique ou un cristal solide ou un disque ou un matériau isotrope tel que la silice par exemple. La longueur du composant optique du module de mise en forme spectrale 3 est par exemple comprise entre 0,1 mm et 5 m et dépend de la deuxième puissance crête P2.

Le module de mise en forme spectrale 3 est adapté pour recevoir l'impulsion amplifiée 120, pour élargir spectralement ladite impulsion amplifiée 120 et pour former une impulsion amplifiée et élargie spectralement 13 de durée comprise entre 10 fs et 50 ps. Le module de mise en forme spectrale 3 permet à la fois d'atténuer les modulations spectrales et d'obtenir un lissage spectral de l'impulsion amplifiée 120. Le module de mise en forme spectrale permet donc de former en sortie une impulsion amplifiée et élargie spectralement 13. L'impulsion amplifiée et élargie spectralement 13 possède généralement une énergie comprise entre 0,1 nJ et 10 µJ correspondant à une puissance crête comprise entre 100 W et 1 GW et de durée temporelle comprise entre 10 fs et 50 ps.

La figure 3 représente un exemple de profil spectral d'une impulsion amplifiée obtenu en entrée et en sortie du module de mise en forme spectrale selon le mode de réalisation illustré sur la figure 5. Dans cet exemple, la courbe (a) représente le profil spectral de l'impulsion amplifiée 120, comprimée et convertie en fréquence en entrée du module de mise en forme spectrale 3 et la courbe (b) représente le profil spectral de l'impulsion amplifiée et élargie spectralement 13 obtenu en sortie du module de mise en forme spectrale 3. Dans l'exemple de la figure 3, l'impulsion ultra-courte amplifiée convertie en fréquence à l'entrée du module de mise en forme spectrale 3 a une bande spectrale B1 d'environ 32,5 nm et une profondeur de modulation spectrale M1 d'environ 55 %. En sortie du module de mise en forme spectrale 3, l'impulsion amplifiée et élargie spectralement 13 a une bande spectrale B2 d'environ 62 nm et une profondeur de modulation spectrale M2 d'environ 39 %. La profondeur de modulation spectrale a diminué de 30%. De plus, la bande spectrale s'est élargie de presque 100 %.

Entre les courbes (a) et (b) de la figure 3, on observe une diminution de la profondeur de modulation spectrale de 55% à 39% et le profil spectral de l'impulsion amplifiée et élargie spectralement 13 est lissé. Le lissage du profil spectral est induit par un élargissement spectral non-linéaire du profil spectral : les pics présents sur la courbe (a) s'étalent en intensité sur la courbe (b) comblant ainsi les trous et les oscillations de modulations spectrales.

Pour générer les effets optiques non-linéaires responsables du lissage du profil spectral de l'impulsion lumineuse, il est nécessaire de choisir le module de mise en forme spectrale 3 (dans cet exemple une fibre optique) dont les paramètres (longueur, dispersion de vitesse de groupe β₂ et coefficient non-linéaire γ) sont optimisés en fonction de la deuxième puissance crête P2. En combinant les effets optiques non-linéaires générés par l'impulsion amplifiée et comprimée 12 le long du module de mise en forme spectrale 3 et les paramètres du composant optique du module de mise en forme spectrale 3 tels que la dispersion de vitesse de groupe β₂, il est possible d'élargir spectralement chacune des modulations spectrales de manière à combler au moins partiellement les espacements entre chaque modulation spectrale.

La figure 4 représente un système de génération d'impulsion lumineuse ultra-courte et de forte énergie selon différentes variantes de l'invention. En traits pleins sont représentés les éléments communs aux différentes variantes du système de génération d'impulsion lumineuse ultra-courte et de forte énergie selon l'invention (décrit précédemment en lien avec la figure 1). En traits tiretés sont représentés un ou plusieurs composants optionnels.

Il est possible, d'une part, de disposer, entre l'amplificateur optique 2 et le module de mise en forme spectrale 3, un ou plusieurs composants 4, 5, 6, 60 décrits ci-dessous. D'autre part, il est possible de disposer en sortie du module de mise en forme spectrale 3 un ou plusieurs composants 41, 51, 61 décrits ci-dessous et en option un amplificateur optique de puissance 9.

Dans certains cas, lorsque le composant optique du module de mise en forme spectrale 3 est raccordé par soudage à l'amplificateur optique 2, l'impulsion amplifiée et élargie spectralement 13 en sortie du module de mise en forme spectrale 3 devient directement une impulsion amplifiée et comprimée de durée courte ou ultra-courte.

De façon alternative, l'étape de compression de l'impulsion amplifiée peut provenir pour une partie, de l'amplificateur optique 2 et pour une autre partie d'un autre compresseur linéaire ou non-linéaire 4, 41. Dans ce cas, l'étape de compression de l'impulsion amplifiée se produit de façon partielle dans le compresseur additionnel 4, 41, par exemple à base de fibre optique passive, indépendamment de l'amplificateur optique 2. Ce compresseur 4,41 additionnel permet d'obtenir une compression complémentaire de la compression non-linéaire fournie par l'amplificateur optique 2.

Dans une variante particulière lorsque le module de mise en forme spectrale 3 est positionné en espace libre et/ou comprend un ou plusieurs composants disposés en amont du module de mise en forme spectrale 3, l'impulsion amplifiée en entrée du module de mise en forme spectrale 3 est généralement une impulsion amplifiée présentant une dérive en fréquence induite par les composants disposés entre l'amplificateur optique 2 et le module de mise en forme spectrale 3. Dans ce cas de figure, il est possible d'ajouter en sortie de l'amplificateur optique 2, le compresseur 4 additionnel permettant d'obtenir une impulsion amplifiée recomprimée 14 de durée ultra-courte. Le compresseur 4 additionnel possède une valeur de dispersion de vitesse de groupe opposée à la somme des dispersions de vitesse de groupe des composants optionnels et/ou en espace libre disposés entre l'amplificateur optique 2 et le module de mise en forme spectrale 3.

Dans une autre variante, par exemple si le module de mise en forme spectrale est collé à l'amplificateur optique 2, un autre compresseur additionnel 41, par exemple à fibre optique, est disposé à la sortie du module de mise en forme spectrale 3.

Dans ces deux variantes, l'amplificateur optique 2 assure la fonction d'amplification de l'impulsion source étirée temporellement et une partie de la compression temporelle. Le compresseur 4 additionnel ou l'autre compresseur additionnel 41 assurent une autre partie de la compression temporelle et permettent de former en sortie une impulsion amplifiée, recomprimée, de durée ultra-courte et élargie spectralement.

Selon encore une autre variante, en combinant les deux variantes décrites ci-dessus, un compresseur additionnel 4 est disposé entre l'amplificateur optique 2 et le module de mise en forme spectrale 3, et un autre compresseur additionnel 41 est disposé en aval du module de mise en forme spectrale 3.

De façon optionnelle, on observe sur la figure 4 qu'il est possible de disposer en sortie de l'amplificateur optique 2 un module optique non-linéaire de conversion de fréquence 5 via un processus de génération de deuxième, troisième et/ou quatrième harmonique de l'impulsion amplifiée ou de somme de fréquence ou de différence de fréquence. En variante, il est possible de disposer un autre module optique non linéaire de conversion de fréquence 51 en sortie du module de mise en forme spectrale 3. Par exemple, sur la figure 4, l'autre module optique non linéaire de conversion de fréquence 51 est disposé entre le module de mise en forme spectrale 3 et l'autre compresseur additionnel 41.

En variante, il est également possible de disposer, en sortie de l'amplificateur optique 2, un module de mise en forme spatiale ou d'adaptation modale 6 de l'impulsion amplifiée et/ou un autre module de mise en forme spatiale ou d'adaptation modale 60 de l'impulsion amplifiée. Le module de mise en forme spatiale ou d'adaptation modale 6 est disposé en amont du module optique non-linéaire de conversion de fréquence 5. Le module de mise en forme spatiale ou d'adaptation modale 6 permet de focaliser le faisceau de l'impulsion amplifiée dans le module optique non-linéaire de conversion de fréquence 5 et ainsi permet de maximiser la conversion en fréquence. L'autre module de mise en forme spatiale ou d'adaptation modale 60 est disposé en aval du module optique non-linéaire de conversion de fréquence 5. Le module optique non-linéaire de conversion de fréquence 5 permet de focaliser le faisceau converti en fréquence à l'entrée du module de mise en forme spectrale 3 et permet ainsi d'adapter le diamètre du faisceau à celui du mode d'entrée du module de mise en forme spectrale 3. Selon une autre variante, il est possible de disposer en sortie de module de mise en forme spectrale 3 un autre module de mise en forme spatiale ou d'adaptation modale 61 de l'impulsion amplifiée. Le module de mise en forme spatiale ou d'adaptation modale 61 permet de collimater le faisceau de l'impulsion amplifiée en sortie du module de mise en forme spectrale 3. Il est également possible de combiner les deux variantes décrites ci-dessus.

Le module de mise en forme spatiale 6, 60, 61 comprend par exemple une ou plusieurs lentille(s) ou miroir(s) ou adaptateur(s) de mode fibré. Le module de mise en forme spatiale 6 peut être disposé entre le compresseur 4 additionnel et le module optique non-linéaire de conversion de fréquence 5. Le module de mise en forme spatiale 60 peut être disposé entre le module optique non-linéaire de conversion de fréquence 5 et le module de mise en forme spectrale 3. Le module de mise en forme spatiale 61 peut être disposé entre le module de mise en forme spectrale 3 et l'autre module optique non-linéaire de conversion de fréquence 51. Le module optique non-linéaire de conversion de fréquence 5, 51 comprend par exemple un ou plusieurs cristaux non-linéaires.

Nous considérons plusieurs variantes (non illustrées) du système de génération d'impulsion lumineuse ultra-courte et de forte énergie de l'invention en lien avec la figure 4 et celles-ci sont présentées ci-dessous de manière détaillée.

Selon une première variante de l'invention, le système de génération d'impulsion lumineuse ultra-courte et de forte énergie de la figure 4 comprend un module de mise en forme spatiale ou d'adaptation modale 6 de l'impulsion amplifiée disposé entre l'amplificateur optique 2 et le module de mise en forme spectrale 3. Le module de mise en forme spatiale ou d'adaptation modale 6 de l'impulsion amplifiée permet de changer la taille du faisceau de l'impulsion amplifiée en sortie de l'amplificateur optique 2. Le module de mise en forme spatiale ou d'adaptation modale 6 permet ainsi d'adapter le diamètre du faisceau à celui du mode d'entrée du module de mise en forme spectrale 3 (ce qui maximise l'efficacité dudit module de mise en forme spectrale 3).

Dans une deuxième variante et en se basant sur les éléments décrits dans la première variante, un compresseur additionnel 4 est disposé entre l'amplificateur optique 2 et le module de mise en forme spatiale ou d'adaptation modale 6. Le compresseur additionnel 4 permet de compresser l'impulsion amplifiée afin de maximiser la puissance crête P2 en entrée du module de mise en forme spectrale 3 et ainsi maximise l'efficacité du module de mise en forme spectrale 3. Le compresseur additionnel 4 permet aussi de compenser la dispersion linéaire induite par le module de mise en forme spatiale ou d'adaptation modale 6 et ainsi être sûr de maximiser la puissance crête P2 injectée dans le module de mise en forme spectrale 3. Le module de mise en forme spatiale ou d'adaptation modale 6 de l'impulsion amplifiée permet de changer la taille du faisceau de l'impulsion amplifiée et permet ainsi d'adapter le diamètre du faisceau à celui du mode d'entrée du module de mise en forme spectrale 3 (ce qui maximise l'efficacité dudit module de mise en forme spectrale 3).

Dans une troisième variante de l'invention, le système de génération d'impulsion lumineuse ultra-courte et de forte énergie de la figure 4 comprend un compresseur additionnel 4 disposé entre l'amplificateur optique 2 et le module de mise en forme spectrale 3. Le compresseur additionnel 4 permet de compresser l'impulsion amplifiée afin de maximiser la puissance crête P2 et permet ainsi de maximiser l'efficacité du module de mise en forme spectrale 3.

Dans une quatrième variante et en se basant sur les éléments décrits dans la deuxième variante, un module optique non-linéaire de conversion de fréquence 5 est disposé en sortie du module de mise en forme spatiale ou d'adaptation modale 6 et un autre module de mise en forme spatiale ou d'adaptation modale 60 de l'impulsion amplifiée est disposé entre le module optique non-linéaire de conversion de fréquence 5 et le module de mise en forme spectrale 3. Le compresseur additionnel 4 permet de compresser l'impulsion amplifiée afin maximiser la puissance crête P2 et permet ainsi de maximiser l'efficacité de la conversion en fréquence induite par le module optique non-linéaire de conversion de fréquence 5. Le compresseur additionnel 4 permet aussi de compenser la dispersion linéaire induite par le module de mise en forme spatiale ou d'adaptation modale 6. Le module de mise en forme spatiale ou d'adaptation modale 6 de l'impulsion amplifiée permet de focaliser le faisceau de l'impulsion amplifiée dans le module optique non-linéaire de conversion de fréquence 5 et permet ainsi de maximiser la conversion en fréquence. Le module optique non-linéaire de conversion de fréquence 5 permet avantageusement de changer la longueur d'onde centrale de l'impulsion amplifiée. Le module de mise en forme spatiale ou d'adaptation modale 60 permet avantageusement de changer la taille du faisceau de l'impulsion amplifiée convertie en fréquence et permet ainsi d'adapter le diamètre du faisceau à celui du mode d'entrée du module de mise en forme spectrale 3 (ce qui maximise l'efficacité dudit module de mise en forme spectrale 3).

Dans une cinquième variante et en se basant sur les éléments décrits dans la deuxième variante, un module optique non-linéaire de conversion de fréquence 51 est disposé en sortie du module de mise en forme spectrale 3 et un autre module de mise en forme spatiale ou d'adaptation modale 61 de l'impulsion amplifiée est disposé entre le module optique non-linéaire de conversion de fréquence 51 et le module de mise en forme spectrale 3. Le module optique non-linéaire de conversion de fréquence 51 permet de changer la longueur d'onde centrale de l'impulsion qui a été mise en forme spectralement par le module de mise en forme spectrale 3. Le module de mise en forme spatiale ou d'adaptation modale 61 de l'impulsion amplifiée permet de focaliser le faisceau de l'impulsion amplifiée dans le module optique non-linéaire de conversion de fréquence 51 et permet ainsi de maximiser la conversion en fréquence.

Dans une sixième variante et en se basant sur les éléments décrits dans la troisième variante, un module optique non-linéaire de conversion de fréquence 51 est disposé en sortie du module de mise en forme spectrale 3 et un module de mise en forme spatiale ou d'adaptation modale 61 de l'impulsion amplifiée est disposé entre le module optique non-linéaire de conversion de fréquence 51 et le module de mise en forme spectrale 3. Le module optique non-linéaire de conversion de fréquence 51 permet de changer la longueur d'onde centrale de l'impulsion qui a été mise en forme spectralement par le module de mise en forme spectrale 3. Le module de mise en forme spatiale ou d'adaptation modale 61 de l'impulsion amplifiée permet de focaliser le faisceau de l'impulsion amplifiée dans le module optique non-linéaire de conversion de fréquence 51 et permet ainsi de maximiser la conversion en fréquence.

Dans une septième variante et en se basant sur les éléments décrits dans la première variante, un module optique non-linéaire de conversion de fréquence 5 est disposé en sortie du module de mise en forme spatiale ou d'adaptation modale 6, et un autre module de mise en forme spatiale ou d'adaptation modale 60 de l'impulsion amplifiée est disposé entre le module optique non-linéaire de conversion de fréquence 5 et le module de mise en forme spectrale 3. Le module de mise en forme spatiale ou d'adaptation modale 6 permet de focaliser le faisceau de l'impulsion amplifiée dans le module optique non-linéaire de conversion de fréquence 5 et permet ainsi de maximiser la conversion en fréquence. Le module optique non-linéaire de conversion de fréquence 5 permet de changer la longueur d'onde centrale de l'impulsion amplifiée. Le module de mise en forme spatiale ou d'adaptation modale 60 permet de changer la taille du faisceau de l'impulsion amplifiée convertie en fréquence et permet ainsi d'adapter le diamètre du faisceau à celui du mode d'entrée du module de mise en forme spectrale 3 (ce qui maximise l'efficacité dudit module de mise en forme spectrale 3).

Dans une huitième variante et en se basant sur les éléments décrits dans la septième variante, un autre module optique non-linéaire de conversion de fréquence 51 est disposé en sortie du module de mise en forme spectrale 3 et un autre module de mise en forme spatiale ou d'adaptation modale 61 de l'impulsion amplifiée est disposé entre l'autre module optique non-linéaire de conversion de fréquence 51 et le module de mise en forme spectrale 3. Le module optique non-linéaire de conversion de fréquence 51 permet de changer la longueur d'onde centrale de l'impulsion mise en forme spectralement par le module de mise en forme spectrale 3. Le module de mise en forme spatiale ou d'adaptation modale 61 de l'impulsion amplifiée permet de focaliser le faisceau de l'impulsion amplifiée dans le module optique non-linéaire de conversion de fréquence 51 et permet ainsi de maximiser la conversion en fréquence.

Dans une neuvième variante et en se basant sur les éléments décrits dans la première variante, un module optique non-linéaire de conversion de fréquence 51 est disposé en sortie du module de mise en forme spectrale 3 et un autre module de mise en forme spatiale ou d'adaptation modale 61 de l'impulsion amplifiée est disposé entre le module optique non-linéaire de conversion de fréquence 51 et le module de mise en forme spectrale 3. Le module optique non-linéaire de conversion de fréquence 51 permet de changer la longueur d'onde centrale de l'impulsion qui a été mise en forme spectralement par le module de mise en forme spectrale 3. Le module de mise en forme spatiale ou d'adaptation modale 61 de l'impulsion amplifiée permet de focaliser le faisceau de l'impulsion amplifiée dans le module optique non-linéaire de conversion de fréquence 51 et permet ainsi de maximiser la conversion en fréquence.

Selon une dixième variante de l'invention, le système de génération d'impulsion lumineuse ultra-courte et de forte énergie de la figure 4 comprend un module optique non-linéaire de conversion de fréquence 51 disposé en sortie du module de mise en forme spectrale 3 et un module de mise en forme spatiale ou d'adaptation modale 61 de l'impulsion amplifiée disposé entre le module optique non-linéaire de conversion de fréquence 51 et le module de mise en forme spectrale 3. Le module optique non-linéaire de conversion de fréquence 51 permet de changer la longueur d'onde centrale de l'impulsion qui a été mise en forme spectralement par le module de mise en forme spectrale 3. Le module de mise en forme spatiale ou d'adaptation modale 61 de l'impulsion amplifiée permet de focaliser le faisceau de l'impulsion amplifiée dans le module optique non-linéaire de conversion de fréquence 51 et permet ainsi de maximiser la conversion en fréquence.

La figure 5 représente un schéma d'un système de génération d'impulsion lumineuse amplifiée et élargie spectralement 13 en sortie du module de mise en forme spectrale selon un mode de réalisation particulier. Les signes de références identiques sur la figure 4 désignent des éléments analogues sur la figure 5.

Dans ce mode de réalisation particulier, le système de génération d'impulsion lumineuse amplifiée et élargie spectralement 13 comprend dans l'ordre suivant un générateur 1, un amplificateur optique 2, un module de mise en forme spatiale ou d'adaptation modale 6 de l'impulsion amplifiée, un module optique non-linéaire de conversion de fréquence 5 via un processus de génération de deuxième harmonique de l'impulsion amplifiée, un autre module de mise en forme spatiale ou d'adaptation modale 60 de l'impulsion amplifiée et un module de mise en forme spectrale 3. Le module de mise en forme spatiale ou d'adaptation modale 6 permet de focaliser le faisceau de l'impulsion amplifiée dans le module optique non-linéaire de conversion de fréquence 5 et permet ainsi de maximiser la conversion en fréquence. Le module de mise en forme spatiale ou d'adaptation modale 60 permet de changer la taille du faisceau de l'impulsion amplifiée convertie en fréquence et permet ainsi d'adapter le diamètre du faisceau à celui du mode d'entrée du module de mise en forme spectrale 3 (ce qui maximise l'efficacité dudit module de mise en forme spectrale 3).

Dans ce mode de réalisation particulier, le générateur 1 est un laser à fibre qui délivre une impulsion source courte étirée temporellement 11. L'amplificateur optique 2 reçoit en entrée l'impulsion source courte 11 et forme en sortie une impulsion amplifiée comprimée non-linéairement 12 de durée ultra-courte. L'amplificateur optique 2 est disposé entre le générateur 1 et le module de mise en forme spatiale ou d'adaptation modale 6 de l'impulsion amplifiée.

Le module de mise en forme spatiale ou d'adaptation modale 6 de l'impulsion amplifiée reçoit l'impulsion amplifiée et comprimée 12 et forme en sortie une impulsion amplifiée, comprimée et mise en forme spatialement 16. Le module de mise en forme spatiale ou d'adaptation modale 6 de l'impulsion amplifiée est disposé entre l'amplificateur optique 2 et le module optique non-linéaire de conversion de fréquence 5. Ici, le module de mise en forme spatiale ou d'adaptation modale 6 de l'impulsion amplifiée a un grandissement de 0,5.

Le module optique non-linéaire de conversion de fréquence 5 reçoit l'impulsion amplifiée, comprimée et mise en forme spatialement 16 et forme en sortie une impulsion amplifiée convertie en fréquence 15 (via un processus de génération de deuxième harmonique de l'impulsion amplifiée). Le module optique non-linéaire de conversion de fréquence 5 est disposé entre le module de mise en forme spatiale ou d'adaptation modale 6 et l'autre module de mise en forme spatiale ou d'adaptation modale 60. Ici, le module optique non-linéaire de conversion de fréquence 5 via un processus de génération de deuxième harmonique de l'impulsion amplifiée est un cristal de niobate de lithium de 100 µm d'épaisseur.

L'autre module de mise en forme spatiale ou d'adaptation modale 60 reçoit en entrée l'impulsion amplifiée convertie en fréquence 15 et forme en sortie une impulsion amplifiée mise en forme spatialement pour entrer dans le module de mise en forme spectrale 3. L'autre module de mise en forme spatiale ou d'adaptation modale 60 est disposé entre le module optique non-linéaire de conversion de fréquence 5 et le module de mise en forme spectrale 3. Ici, l'autre module de mise en forme spatiale ou d'adaptation modale 60 de l'impulsion amplifiée est une paire de lentille de grandissement 1. Le module de mise en forme spatiale ou d'adaptation modale 60 permet de changer la taille du faisceau de l'impulsion amplifiée convertie en fréquence et permet ainsi d'adapter le diamètre du faisceau à celui du mode d'entrée du module de mise en forme spectrale 3 (ce qui maximise l'efficacité dudit module de mise en forme spectrale 3).

Le module de mise en forme spectrale 3 reçoit en entrée l'impulsion amplifiée 120 et forme en sortie une impulsion élargie spectralement 13. Le module de mise en forme spectrale 3 est disposé à la sortie de l'autre module de mise en forme spatiale ou d'adaptation modale 60.

Dans un exemple d'application, la fibre amplificatrice de l'amplificateur optique 2 a une dispersion de vitesse de groupe négative égale à -21 ps²/km et une longueur d'environ 2 m. La fibre amplificatrice de l'amplificateur 2 est codopée erbium-ytterbium (Er/Yb). L'impulsion ultra-courte amplifiée et comprimée 12 d'une durée de 45 fs se propage dans un module optique non-linéaire de conversion de fréquence 5 via un processus de génération de deuxième harmonique qui génère une impulsion amplifiée 120 convertie en fréquence autour de 800 nm dans un autre module de mise en forme spatiale ou d'adaptation modale 60. L'impulsion amplifiée 120 convertie en fréquence en entrée du module 3 possède une énergie d'environ 1 nJ et une deuxième puissance crête P2 de 16 kW pour une longueur d'onde d'utilisation autour de 800 nm. L'impulsion amplifiée 120 convertie en fréquence se propage dans le module de mise en forme spectrale 3 de 2 m de long et ayant une dispersion de vitesse de groupe positive égale à 45 ps²/km et un coefficient non-linéaire γ d'environ 9 x 10⁻³ m⁻¹.W⁻¹. Le composant optique du module de mise en forme spectrale est par exemple ici une fibre optique.

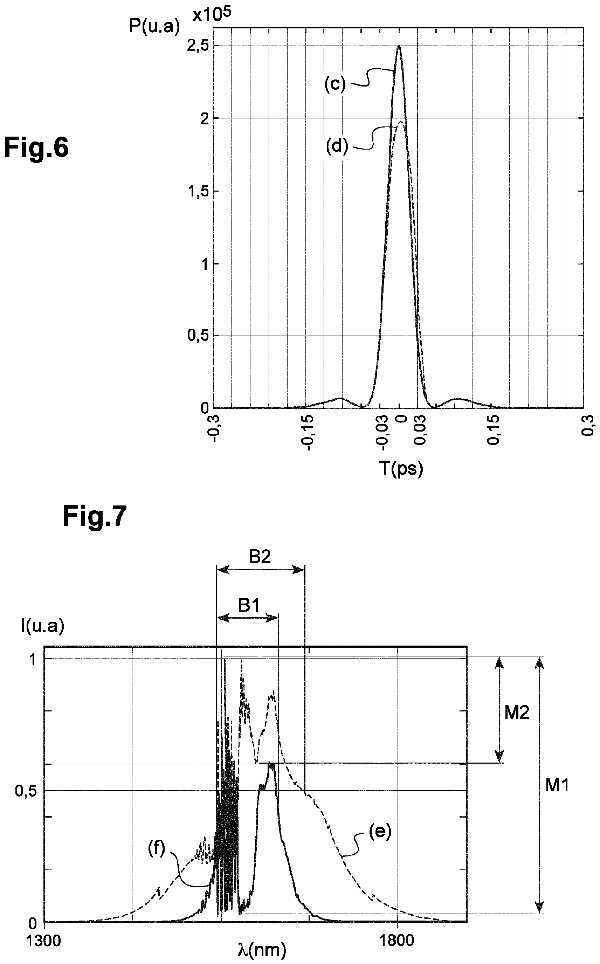

La figure 6 représente un exemple d'une simulation numérique d'un profil temporel d'une impulsion amplifiée obtenue en entrée et en sortie du module de mise en forme spectrale tel que décrit ci-dessous. Dans cet exemple, la courbe (c) représente la simulation numérique du profil temporel de l'impulsion amplifiée 120 en sortie de l'amplificateur optique 2, et en entrée d'un module de mise en forme spectrale, et la courbe (d) représente la simulation numérique du profil temporel de l'impulsion amplifiée et élargie spectralement 13 obtenu en sortie du module de mise en forme spectrale 3.

Ici, l'impulsion amplifiée et comprimée 12 possède une énergie égale à 12 nJ correspondant à une deuxième puissance crête P2 d'environ 250 kW à une longueur d'onde d'utilisation égale à 1600 nm. La fibre amplificatrice de l'amplificateur optique 2 a une dispersion de vitesse de groupe négative égale à -21 ps²/km et une longueur égale à 2 m. La fibre amplificatrice de l'amplificateur 2 est codopée erbium-ytterbium (Er/Yb). L'impulsion amplifiée et comprimée 12 se propage dans un composant optique du module de mise en forme spectrale 3 de 2,1 mm de long et ayant une dispersion de vitesse de groupe positive égale à 40 ps²/km et un coefficient non-linéaire γ d'environ 9,4 x 10⁻³ m⁻¹.W⁻¹. Le composant optique du module de mise en forme spectrale est par exemple ici une fibre.

Le graphique de la figure 6 montre que la présence du module de mise en forme spectrale ne dégrade quasiment pas la durée de l'impulsion ultra-courte amplifiée et comprimée. En effet, la durée de l'impulsion ultra-courte amplifiée en entrée et en sortie du module de mise en forme spectrale est égale à 41 fs. On observe sur le graphique de la figure 6 une perte limitée en puissance crête de l'ordre de 20 %.

La figure 7 représente un exemple d'une simulation numérique d'un profil spectral de l'impulsion amplifiée et comprimée obtenue en entrée et en sortie du module de mise en forme spectrale tel que décrit en lien avec le profil temporel illustré sur la figure 6. Dans cet exemple, la courbe (f) représente le profil spectral de l'impulsion amplifiée 120 à l'entrée du module de mise en forme spectrale 3 et la courbe (e) représente le profil spectral de l'impulsion amplifiée et élargie spectralement 13 obtenu en sortie du module de mise en forme spectrale 3.

Dans l'exemple de la figure 7, l'impulsion amplifiée 120 à l'entrée du module de mise en forme spectrale 3 a une bande spectrale B1 d'environ 83 nm et une profondeur de modulation spectrale M1 d'environ 97 %. En sortie du module de mise en forme spectrale 3, l'impulsion amplifiée et élargie spectralement 13 a une bande spectrale B2 d'environ 124,5 nm et une profondeur de modulation spectrale M2 d'environ 40,5 %. La profondeur de modulation spectrale a diminué de 37 % et la bande spectrale de l'impulsion amplifiée 120 a été élargie de 42 nm.

Entre les courbes (f) et (e) de la figure 7, on observe une diminution de la profondeur de modulation spectrale de 97 % à 40,5 % et le profil spectral de l'impulsion amplifiée, comprimée et étirée 13 est lissé. Le lissage du profil spectral est induit par un élargissement spectral non-linéaire du profil spectral : les pics présents sur la courbe (f) s'étalent en intensité sur la courbe (e) comblant ainsi au moins partiellement les trous ou les oscillations de modulations spectrales.

Dans un autre exemple (non illustré), l'impulsion ultra-courte amplifiée et comprimée 12 à l'entrée du module de mise en forme spectrale 3 possède une énergie égale à 14 nJ pour une longueur d'onde d'utilisation égale à 1600 nm. La fibre amplificatrice de l'amplificateur optique 2 a une dispersion de vitesse de groupe négative égale à - 21 ps²/km et une longueur égale à 2 m. La fibre amplificatrice de l'amplificateur 2 est d'un matériau codopée erbium-ytterbium Er/Yb. L'impulsion amplifiée et comprimée 12 se propage dans un composant optique du module de mise en forme spectrale 3 de 1,5 mm de long et ayant une dispersion de vitesse de groupe positive égale à 40 ps²/km et un coefficient non-linéaire γ d'environ 9,4 x 10⁻³ m⁻¹.W⁻¹. Le composant optique du module de mise en forme spectrale est par exemple ici une fibre optique. Dans cet exemple, la durée de l'impulsion ultra-courte amplifiée et comprimée en entrée et en sortie du module de mise en forme spectrale est environ égale à 40 fs. Dans cet exemple (non illustré), l'impulsion amplifiée 120 à l'entrée du module de mise en forme spectrale a une bande spectrale B1 d'environ 15 nm et une profondeur de modulation spectrale M1 d'environ 95 %. En sortie du module de mise en forme spectrale, l'impulsion amplifiée et élargie spectralement 13 a une bande spectrale B2 d'environ 19 nm et une profondeur de modulation spectrale M2 d'environ 75 %. La profondeur de modulation spectrale a diminué de 20 % et la bande spectrale de l'impulsion amplifiée 120 a été élargie de 4 nm.

Le système de génération d'impulsion lumineuse ultra-courte de forte énergie décrit précédemment est facile à utiliser et permet avantageusement d'injecter une impulsion lumineuse dans un amplificateur optique de forte puissance noté 9 sur la figure 4, par exemple dans un amplificateur optique titane-saphir.

Dans une application, un système laser comprend le système de génération d'impulsion lumineuse ultra-courte de forte énergie décrit selon l'un quelconque des modes de réalisation décrits ci-dessus et un amplificateur optique de puissance 9 (illustré ici sur la figure 4), par exemple un amplificateur régénératif CPA titane-saphir ou un système amplificateur de type CPA multipassage. L'amplificateur optique régénératif titane-saphir 9 est disposé en aval du module de mise en forme spectrale 3. L'amplificateur optique régénératif titane-saphir est adapté pour recevoir l'impulsion amplifiée et élargie spectralement 13 et pour former en sortie une impulsion de très forte énergie comprise entre 1 µJ et 25 mJ avec des durées comprises entre 1 fs et 100 fs. Le système de génération d'impulsion lumineuse ultra-courte de forte énergie permet avantageusement d'obtenir un lissage du profil spectral de l'impulsion lumineuse à injecter en entrée de l'amplificateur optique régénératif titane-saphir CPA. Le lissage spectral de l'impulsion lumineuse injectée dans l'amplificateur optique régénératif titane-saphir CPA permet ainsi de diminuer les risques de casse ou d'endommagement dans l'amplificateur optique régénératif titane-saphir CPA.

Le système de génération d'impulsion lumineuse ultra-courte de forte énergie utilisant le module de mise en forme spectrale 3 permet d'élargir le spectre d'une impulsion ultra-courte amplifiée et comprimée non-linéairement et de réduire la profondeur des modulations spectrales de ladite impulsion lumineuse amplifiée, par exemple de 95 % à 25 %, en élargissant la bande spectrale de l'impulsion amplifiée.

Le système de génération d'impulsion lumineuse ultra-courte de forte énergie utilisant le module de mise en forme spectrale 3 peut être utilisé pour des applications destinées à la conversion en fréquence, au pompage d'oscillateur paramétrique optique, la chimie-femtoseconde, la spectroscopie, la génération de fréquence THz, l'imagerie ultra-rapide, l'imagerie non-linéaire, la polymérisation à deux photons, la technique pompe-sonde, la tomographie en cohérence optique ou la microscopie.

L'amplificateur optique 2 et le module de mise en forme spectrale 3 forment avantageusement un système compact entièrement fibré (« all-fiber ») ou un ensemble mixte fibre-solide.

De préférence, les autres composants en option tels que le compresseur 4, 41 ou le module de mise en forme spatiale 6, 60, 61, sont aussi à fibre optique pour former un système compact et éventuellement entièrement fibré.

## Revendications

1. Système de génération d'impulsion lumineuse ultra-courte de forte énergie comprenant un générateur (1) adapté pour générer au moins une impulsion source (11) courte étirée temporellement, un amplificateur optique (2) à amplification non-linéaire et à compression non-linéaire comprenant une fibre optique amplificatrice ayant une dispersion de vitesse de groupe β₂ négative dans une gamme de longueur d'onde d'utilisation, ledit amplificateur optique (2) à amplification non-linéaire et à compression non-linéaire étant adapté pour amplifier et comprimer non-linéairement ladite impulsion source (11) courte étirée temporellement et pour former une impulsion amplifiée (12, 120), dans lequel le système comporte un module de mise en forme spectrale (3) disposé en aval de ladite fibre optique amplificatrice, le module de mise en forme spectrale (3) comprenant un composant optique comprenant une fibre optique ou un cristal solide ou un matériau solide non cristallin ou un disque, le composant optique ayant une dispersion de vitesse de groupe β₂ positive et un coefficient non-linéaire y, la longueur du composant optique du module de mise en forme spectrale (3) étant choisie en fonction d'une deuxième puissance crête (P2) en entrée du module de mise en forme spectrale (3), de la dispersion de vitesse de groupe β₂ et du coefficient non-linéaire γ du composant optique du module de mise en forme spectrale (3), ledit module de mise en forme spectrale (3) étant adapté pour recevoir et élargir spectralement ladite impulsion amplifiée (12, 120), et **caractérisé en ce que** le système comprend un compresseur (4, 41) ayant une dispersion de vitesse de groupe négative, et le compresseur (4, 41) étant disposé en aval de l'amplificateur optique (2) à amplification non-linéaire et à compression non-linéaire.

2. Système de génération d'impulsion lumineuse ultra-courte de forte énergie selon la revendication 1 dans lequel la fibre optique amplificatrice est active.

3. Système de génération d'impulsion lumineuse ultra-courte de forte énergie selon la revendication 2 dans lequel la fibre optique amplificatrice est dopée d'un matériau terre rare choisi parmi l'erbium, l'ytterbium, le thulium, l'holmium, le néodyme ou la fibre optique amplificatrice est codopée erbium-ytterbium ou thulium-holmium.

4. Système de génération d'impulsion lumineuse ultra-courte de forte énergie selon la revendication 1 dans lequel la fibre optique amplificatrice est passive et permet une amplification optique non-linéaire paramétrique optique ou Raman.

5. Système de génération d'impulsion lumineuse ultra-courte de forte énergie selon l'une des revendications 1 à 4 dans lequel la fibre optique amplificatrice a une longueur comprise entre 20 cm et 20 m.

6. Système de génération d'impulsion lumineuse ultra-courte de forte énergie selon l'une des revendications 1 à 5 dans lequel la longueur de la fibre optique amplificatrice de l'amplificateur optique (2) à amplification non-linéaire et à compression non-linéaire est choisie en fonction de la première puissance crête (P1) en entrée de l'amplificateur optique (2) à amplification non-linéaire et à compression non-linéaire, de la dispersion de vitesse de groupe β₂ et du coefficient non-linéaire γ de la fibre optique amplificatrice de l'amplificateur optique (2) à amplification non-linéaire et à compression non-linéaire.

7. Système de génération d'impulsion lumineuse ultra-courte de forte énergie selon l'une des revendications 1 à 6 comprenant un module optique non-linéaire (5, 51) de conversion en fréquence disposé en aval de l'amplificateur optique (2) à amplification non-linéaire et à compression non-linéaire de sorte à générer un signal de deuxième, troisième et/ou quatrième harmonique ou de somme de fréquences ou différence de fréquences.

8. Système de génération d'impulsion lumineuse ultra-courte de forte énergie selon l'une des revendications 1 à 7 comprenant un module de mise en forme spatiale ou d'adaptation modale (6, 60, 61) de l'impulsion amplifiée, le module de mise en forme spatiale ou d'adaptation modale (6, 60, 61) comprenant une ou plusieurs lentille(s) ou miroir(s) ou adaptateur(s) de mode fibré et étant disposé en amont ou en aval du module de mise en forme spectrale (3).

9. Système laser comprenant un système de génération d'impulsion lumineuse ultra-courte de forte énergie selon les revendications 1 à 8 et un système amplificateur optique de puissance (9) disposé en aval du module de mise en forme spectrale (3) et adapté pour recevoir une impulsion ultra-courte amplifiée, comprimée et élargie spectralement (13) issue du système de génération d'impulsion. 1

## Patentansprüche

1. System zur Erzeugung eines hochenergetischen ultrakurzen Lichtimpulses mit einem Generator (1), der dazu ausgelegt ist, mindestens einen kurzen, zeitlich gedehnten Quellimpuls (11) zu erzeugen, einem optischen Verstärker (2) mit nichtlinearer Verstärkung und nichtlinearer Kompression, der eine optische Verstärkungsfaser aufweist, die eine Dispersion mit einer negativen Gruppengeschwindigkeit β₂ in einem Nutzungswellenlängenbereich hat, wobei der optische Verstärker (2) mit nichtlinearer Verstärkung und nichtlinearer Kompression dazu ausgelegt ist, den kurzen, zeitlich gedehnten Quellimpuls (11) nichtlinear zu verstärken und zu komprimieren, und einen verstärkten Impuls (12, 120) zu bilden, wobei das System ein nach der optischen Verstärkerfaser angeordnetes Modul (3) zum spektralen Formen aufweist, wobei das Modul (3) zum spektralen Formen ein optisches Element mit einer optischen Faser oder einem Festkristall oder einem nichtkristallinen festen Material oder einer Scheibe aufweist, wobei das optische Element eine Dispersion mit einer positiven Gruppengeschwindigkeit β₂ und einem nichtlinearen Koeffizienten γ hat, wobei die Länge des optischen Elements des Moduls (3) zum spektralen Formen in Abhängigkeit von einer zweiten Spitzenleistung (P2) am Eingang des Moduls (3) zum spektralen Formen, von der Dispersion der Gruppengeschwindigkeit β₂ und vom nichtlinearen Koeffizienten γ des optischen Elements des Moduls (3) zum spektralen Formen ausgewählt ist, wobei das Modul (3) zum spektralen Formen dazu ausgelegt ist, den ungsn Impuls (12, 120) zu empfangen und spektral zu erweitern,
**dadurch gekennzeichnet, daß** das System einen Kompressor (4, 41) aufweist, der eine Dispersion mit negativer Gruppengeschwindigkeit hat, wobei der Kompressor (4, 41) nach dem optischen Verstärker (2) mit nichtlinearer Verstärkung und nichtlinearer Kompression angeordnet ist.

2. System zur Erzeugung eines hochenergetischen ultrakurzen Lichtimpulses gemäß Anspruch 1, bei dem die optische Verstärkungsfaser aktiv ist.

3. System zur Erzeugung eines hochenergetischen ultrakurzen Lichtimpulses gemäß Anspruch 2, bei dem die optische Verstärkungsfaser mit einem Seltenerd-Material dotiert ist, das aus Erbium, Ytterbium, Thulium, Holmium, Neodym ausgewählt ist, oder die optische Verstärkungsfaser mit Erbium-Ytterbium oder Thulium-Holmium kodotiert ist.

4. System zur Erzeugung eines hochenergetischen ultrakurzen Lichtimpulses gemäß Anspruch 1, bei dem die optische Verstärkungsfaser passiv ist und eine optische nichtlineare parametrische Verstärkung oder eine Raman-Verstärkung ermöglicht.

5. System zur Erzeugung eines hochenergetischen ultrakurzen Lichtimpulses gemäß einem der Ansprüche 1 bis 4, bei dem die optische Verstärkungsfaser eine Länge zwischen 20 cm und 20 m hat.

6. System zur Erzeugung eines hochenergetischen ultrakurzen Lichtimpulses gemäß einem der Ansprüche 1 bis 5, bei dem die Länge der optischen Verstärkungsfaser des optischen Verstärkers (2) mit nichtlinearer Verstärkung und nichtlinearer Kompression in Abhängigkeit von der ersten Spitzenleistung (P1) am Eingang des optischen Verstärkers (2) mit nichtlinearer Verstärkung und nichtlinearer Kompression, von der Dispersion der Gruppengeschwindigkeit β₂ und vom nichtlinearen Koeffizienten γ der optischen Verstärkungsfaser des optischen Verstärkers (2) mit nichtlinearer Verstärkung und nichtlinearer Kompression gewählt ist.

7. System zur Erzeugung eines hochenergetischen ultrakurzen Lichtimpulses gemäß einem der Ansprüche 1 bis 6 mit einem nichtlinearen optischen Modul (5, 51) für eine Frequenzumwandlung, das nach dem optischen Verstärker (2) mit nichtlinearer Verstärkung und nichtlinearer Kompression angeordnet ist, um ein Signal der zweiten, dritten und/oder vierten Harmonischen oder der Summe oder Differenz von Frequenzen zu erzeugen.

8. System zur Erzeugung eines hochenergetischen ultrakurzen Lichtimpulses gemäß einem der Ansprüche 1 bis 7 mit einem Modul (6, 60, 61) zum räumlichen Formen oder für modale Anpassung des verstärkten Impulses, wobei das Modul (6, 60, 61) zum räumlichenFormen oder für modale Anpassung eine oder mehrere Linse(n) oder Spiegel oder Modenadapter mit Fasern aufweist und vor oder nach dem Modul (3) zum spektralen Formen angeordnet ist.

9. Lasersystem mit einem System zur Erzeugung eines hochenergetischen ultrakurzen Lichtimpulses gemäß einem der Ansprüche 1 bis 8 und einem optischen Leistungsverstärkersystem (9), das nach dem Modul (3) zum spektralen Formen angeordnet ist und dazu ausgelegt ist, einen ultrakurzen verstärkten, komprimierten und spektral gedehnten, aus dem Impulserzeugungssystem kommenden Impuls (13) zu empfangen.

## Claims

1. A system for generating high-energy ultra-short light pulses, comprising a generator (1) adapted to generate at least one short, time-stretched, source pulse (11), a non-linear amplification and non-linear compression optical amplifier (2) comprising an amplifying optical fibre having a negative group velocity dispersion β₂ in a use wavelength range, said non-linear amplification and non-linear compression optical amplifier (2) being adapted to non-linearly amplify and compress said short, time-stretched, source pulse (11) and to form an amplified pulse (12, 120), wherein the system includes a spectral shaping module (3) arranged downstream from said amplifying optical fibre, the spectral shaping module (3) comprising an optical component comprising an optical fibre or a solid crystal or a solid non-crystalline material or a disk, the optical component having a positive group velocity dispersion β₂ and a non-linear coefficient y, the length of the optical component of the spectral shaping module (3) being chosen as a function of a second peak power (P2) at the input of the spectral shaping module (3), of the group velocity dispersion β₂ and of the non-linear coefficient γ of the optical component of the spectral shaping module (3), said spectral shaping module (3) being adapted to receive and spectrally broaden said amplified pulse (12, 120), et
**characterized in that** the system comprises a compressor (4, 41) having a negative group velocity dispersion, and the compressor (4, 41) being arranged downstream from the non-linear amplification and non-linear compression optical amplifier (2).

2. The system for generating high-energy ultra-short light pulses according to claim 1, wherein the amplifying optical fibre is active.

3. The system for generating high-energy ultra-short light pulses according to claim 2, wherein the amplifying optical fibre is doped with a rare-earth material chosen among erbium, ytterbium, thulium, holmium, neodymium or the amplifying optical fibre is co-doped erbium-ytterbium or thulium-holmium.

4. The system for generating high-energy ultra-short light pulses according to claim 1, wherein the amplifying optical fibre is passive and allows a non-linear optical parametric or Raman amplification.

5. The system for generating high-energy ultra-short light pulses according to one of claims 1 to 4, wherein the amplifying optical fibre has a length between 20 cm and 20 m.

6. The system for generating high-energy ultra-short light pulses according to one of claims 1 to 5, wherein the length of the amplifying optical fibre of the non-linear amplification and non-linear compression optical amplifier (2) is chosen as a function of the first peak power (P1) at the input of the non-linear amplification and non-linear compression optical amplifier (2), of the group velocity dispersion β₂ and of the non-linear coefficient γ of the amplifying optical fibre of the non-linear amplification and non-linear compression optical amplifier (2).

7. The system for generating high-energy ultra-short light pulses according to one of claims 1 to 6, comprising a non-linear optical frequency-conversion module (5, 51) arranged downstream from the non-linear amplification and non-linear compression optical amplifier (2), so as to generate a second, third and/or fourth harmonic or frequency sum or frequency difference signal.

8. The system for generating high-energy ultra-short light pulses according to one of claims 1 to 7, comprising a spatial shaping or modal adaptation module (6, 60, 61) of the amplified pulse, the spatial shaping or modal adaptation module (6, 60, 61) comprising one or several lens(es) or mirror(s) or fibred mode adapter(s) and being arranged upstream or downstream from the spectral shaping module (3).

9. A laser system comprising a system for generating high-energy ultra-short light pulses according to claims 1 to 8 and an optical power amplifier system (9) arranged downstream from the spectral shaping module (3) and adapted to receive a compressed and spectrally-broadened, ultra-short amplified pulse (13) coming from the pulse generation system.
